# DEMANDE DE BREVET EUROPEEN

(11) **EP 3 599 419 A1**
(43) Date de publication de la demande: **29.01.2020**
(21) Numéro de dépôt: 19184551.0
(22) Date de dépôt: 04.07.2019
(51) Int. Cl.: F21V 25/12, F21V 3/06, G02B 5/02, F21Y 103/10, F21Y 115/10

(54) **ENVELOPPE POUR LUMINAIRE EXPOSE A UNE ATMOSPHERE EXPLOSIVE ET LUMINAIRE ASSOCIE**

(30) Priorité: 26.07.2018 FR 1856940
(71) Demandeur: Dietal, 63780 Saint Georges de Mons (FR)
(72) Inventeur: CERCLEY, Jean-Pierre, 69220 SAINT JEAN D'ARDIERES (FR)
(74) Mandataire: Cabinet Laurent & Charras

(57) **Abrégé**

L'invention concerne une enveloppe (11) pour luminaire (10) exposé à une atmosphère explosive, ladite enveloppe (11) présentant une zone de diffusion translucide (Z1) destinée à venir en regard d'une source lumineuse (12), ladite zone de diffusion (Z1) de ladite enveloppe (11) intégrant des microbilles de 4 à 10 µm de diamètre, lesdites microbilles représentant entre 0.5% et 2.5% en poids de ladite zone de diffusion de ladite enveloppe (11).

## Description

### DOMAINE TECHNIQUE

L'invention concerne une enveloppe pour un luminaire destiné à être exposé à une atmosphère explosive. L'invention concerne également un luminaire intégrant cette enveloppe.

L'invention trouve une application particulièrement avantageuse pour les luminaires intégrant des sources de lumière de type diodes électroluminescentes (LEDs).

### ART ANTERIEUR

La plupart des pays utilisent des normes imposées aux équipements destinés à fonctionner dans des atmosphères explosives. Les luminaires sont particulièrement concernés par ces normes car les composants électriques et électroniques alimentant la ou les source(s) de lumière peuvent être la cause d'une explosion dans les atmosphères explosives. En outre, il n'est pas suffisant qu'un luminaire soit parfaitement étanche lors de sa conception et de sa commercialisation pour éviter une explosion et il est au contraire nécessaire que ce luminaire présente un vieillissement maîtrisé de sorte qu'après plusieurs années d'utilisation, il ne risque pas d'entraîner une explosion.

En Europe, la règlementation ATEX, pour ATmosphères EXplosives, définit des critères à respecter pour les luminaires en fonction de la dangerosité de la zone dans laquelle ils sont destinés à être implantés. Dans cette réglementation, il est par exemple requis par les normes EN 60079-0 et EN 60079-31 que les luminaires doivent supporter une phase d'endurance thermique de 672 heures à la température de service augmentée de 20°C et avec un taux d'humidité relative de 90 %.

Suite à cette phase d'endurance, les luminaires doivent résister à des tests d'impacts à température ambiante et à basse température. Les luminaires doivent également résister à des tests d'étanchéité et de tenue à la lumière. Le test de tenue à la lumière vise à déterminer que l'enveloppe protégeant la source de lumière n'a pas changé de couleur et de propriété mécanique au cours de la phase d'endurance.

Pour répondre à toutes ces contraintes mécaniques, les luminaires configurés pour être exposés à des atmosphères explosives comportent le plus souvent une source de lumière recouverte par une enveloppe cylindrique ou semi cylindrique aux extrémités de laquelle sont disposés des embouts de fermeture aptes à garantir l'étanchéité de l'enveloppe.

Les développements récents de ces luminaires ont vu l'émergence de sources de lumière de type diodes électroluminescentes (LEDs). Ces sources de lumière à base de LEDs permettent de réduire la consommation globale du luminaire et d'augmenter l'efficacité énergétique, exprimée en Lumen par Watt (Lm/W).

En effet, un des produits les plus typiques à base de source lumineuse fluorescente est le produit « *Petrelux 7 Series* » de la société THORN® qui présente une efficacité lumineuse de 57 lm/W pour un flux lumineux maximum en sortie du luminaire de 4000 lm. En utilisant la technologie LEDs, la société STHAL® propose dans sa « *Série 6036* » des luminaires à LEDs avec une efficacité énergétique deux fois plus importante que la source lumineuse de la société THORN®, environ de 110 lm/W, pour un flux lumineux maximum de 5400 lm.

Bien que cette technologie à LEDs permette de réduire la consommation énergétique, elle présente un risque d'éblouissement qui n'est pas présent dans les luminaires à base de sources lumineuses fluorescentes. En effet, les sources lumineuses à base de LEDs sont constituées d'une pluralité de points lumineux très ponctuels réalisés par des diodes blanches électroluminescentes sur une carte électronique.

Lorsque qu'un opérateur travaillant sous un luminaire à base de LEDs regarde dans la direction de celui-ci, des luminances excessives se trouvent directement dans son champ visuel et peuvent occasionner un éblouissement.

Pour répondre à ce problème d'éblouissement, la société MELTRON® propose un luminaire « *Modular EX LED Lighting System* » avec une enveloppe teintée de sorte à diffuser la lumière des LEDs à travers l'enveloppe de protection. La teinte de l'enveloppe est réalisée par un colorant liquide opaque injecté dans l'enveloppe. Cette solution est efficace pour réduire l'éblouissement dû à la vision directe diodes électroluminescentes du luminaire mais réduit l'efficacité lumineuse et le flux lumineux maximum de ce luminaire. En effet, ce luminaire « *Modular EX LED Lighting System* » présente une efficacité lumineuse proche de 100 lm/W pour un flux lumineux maximum de 4000 lm.

Le problème technique de l'invention est donc de trouver comment réaliser un luminaire capable d'être exposé à une atmosphère explosive avec une efficacité lumineuse proche des dispositifs existants non teintés tout en répondant à la problématique de l'éblouissement.

### EXPOSE DE L'INVENTION

Pour répondre à ce problème technique, l'invention propose une enveloppe pour un luminaire exposé à une atmosphère explosive intégrant des microbilles de polymères au lieu d'un colorant opaque. Le passage de la lumière à travers l'enveloppe induit des diffractions de la lumière à travers les microbilles de sorte à réduire l'éblouissement.

En outre, l'utilisation de microbilles de 4 à 10 µm de diamètre permet de ne pas dégrader l'efficacité lumineuse en sortie du luminaire.

Contre toute attente, la présence des microbilles dans l'enveloppe du luminaire ne dégrade pas non plus drastiquement la résistance mécanique de l'enveloppe lorsque les microbilles représentent entre 0.5% et 2.5% en poids de l'enveloppe. Ainsi, l'enveloppe peut être utilisée pour former un luminaire ATEX en répondant aux tests imposés par les normes EN 60079-0 et EN 60079-31.

A cet effet, selon un premier aspect, l'invention concerne une enveloppe pour luminaire exposé à une atmosphère explosive, ladite enveloppe comportant une zone de diffusion translucide destinée à venir en regard d'une source lumineuse.

L'invention se caractérise en ce que ladite zone de diffusion de ladite enveloppe intègre des microbilles de 4 à 10 µm de diamètre, lesdites microbilles représentant entre 0.5% et 2.5% en poids de ladite zone de diffusion de ladite enveloppe.

Compte tenu des contraintes mécaniques que doivent subir les enveloppes des luminaires destinées à être exposés à des atmosphères explosives, l'utilisation de microbilles est particulièrement contre-intuitive car il est connu que la présence de corps étrangers dans un matériau peut créer des zones préférentielles de fissure. L'utilisation de microbilles de petites tailles associée à un faible ratio de microbilles permet néanmoins de conserver des propriétés mécaniques acceptables tout en assurant une efficacité lumineuse satisfaisante et une diffraction efficace de la lumière pour éviter le phénomène d'éblouissement.

Au sens de l'invention, les microbilles ne sont pas nécessairement sphériques et correspondent à des aspérités intégrées dans le matériau formant l'enveloppe. Les sommets de ces aspérités sont inscrits dans une sphère imaginaire de 4 à 10 µm de diamètre. Pour mesurer la taille d'une aspérité, il suffit de prendre un microscope et de mesurer la plus grande longueur de l'aspérité. Cette plus grande longueur doit être comprise entre 4 à 10 µm pour correspondre à la définition de l'invention.

En ce qui concerne le poids des microbilles par rapport au poids total de la zone de diffusion de l'enveloppe, il faut isoler les différentes matières formant l'enveloppe au niveau de la zone de diffusion pour obtenir le ratio du poids des microbilles par rapport au poids de l'enveloppe.

L'invention peut utiliser des microbilles réparties dans toute l'enveloppe ou uniquement dans la zone de diffusion en regard de la source lumineuse.

Lorsque les microbilles sont réparties dans toute l'enveloppe, le procédé de réalisation est simple car il suffit de mélanger les microbilles avec le matériau formant l'enveloppe avant la formation de l'enveloppe pour intégrer les microbilles.

Lorsque les microbilles sont localisées dans la zone de diffusion, l'enveloppe doit être réalisée en plusieurs parties afin de localiser les microbilles. Ce mode de réalisation permet néanmoins de réduire la quantité de microbilles à utiliser.

De préférence, le matériau de base des microbilles est du polytéréphtalate d'éthylène (PET), du polycarbonate (PC) ou du polyméthacrylate de méthyle (PMMA), ou un assemblage de ces matériaux. Le matériau de base de l'enveloppe correspond au matériau de l'enveloppe avant l'intégration des microbilles. Ce matériau est un polycarbonate traité anti-UV et qui permet d'obtenir une enveloppe apte à répondre aux contraintes de résistance tout en étant translucide dans les longueurs d'ondes des LEDs. En effet, un tube réalisé en PC d'une épaisseur de 2mm présente une transmittance supérieure 87% pour une longueur d'onde de 550 nm.

En outre, ces matériaux que sont le PC ou le PMMA permettent de réaliser l'enveloppe par extrusion de sorte à contrôler précisément les dimensions de l'enveloppe. Ce procédé de réalisation par extrusion permet de réaliser toute sorte de forme. Ainsi, l'enveloppe peut être formée d'un simple tube ou peut prendre d'autres formes plus complexes en fonction de l'encombrement ou du design recherché.

Au sens de l'invention, le terme « enveloppe », désigne la pièce mécanique destinée à recouvrir la source lumineuse et à diffuser la lumière issue de cette source lumineuse. Cette enveloppe peut entourer l'intégralité des éléments assurant la production de la lumière ou recouvrir uniquement la source de lumière. Ainsi, l'enveloppe peut prendre la forme d'un tube ou d'une pièce semi-cylindrique destinée à être associée à une autre pièce pour former une enceinte étanche autour de la source lumineuse.

De préférence, pour faciliter le processus d'extrusion, le matériau de base comporte un indice de fluidité supérieur à 2.5 g/10 min mesuré selon la norme ASTM D 1238.

Pour obtenir la résistance mécanique recherchée, le matériau de base de l'enveloppe comporte préférentiellement un point de ramollissement Vicat pour une charge de 50 N supérieur à 120°C et une gravité spécifique supérieure à 1.0. Le point de ramollissement Vicat indique la température à laquelle la résistance mécanique de l'enveloppe devient assez faible pour laisser pénétrer une aiguille de 50N sur une longueur de 1mm. Cette mesure peut être réalisée suivant la norme ISO 306. La gravité spécifique est une mesure du rapport de la masse de l'enveloppe à température ambiante et dans une eau déminéralisée. Cette mesure peut être réalisée suivant la norme ASTM D 792.

Pour résister effacement à la phase d'endurance dans laquelle le taux d'humidité est de 90 %, le matériau de base de l'enveloppe comporte préférentiellement un taux d'absorption d'eau inférieur à 0.4% et un taux d'absorption d'humidité inférieur à 0.2%. Ces deux taux d'absorption correspondent au pourcentage d'augmentation de la masse de l'enveloppe après une exposition à l'eau. Le taux d'absorption d'eau est mesuré après passage dans l'eau à une température de 23°C selon la norme ISO 62 et le taux d'absorption d'humidité est mesuré après passage dans une enceinte à 23°C avec 50% de taux d'humidité selon la norme ISO 62.

Ces caractéristiques mécaniques de l'enveloppe permettent à l'enveloppe de présenter une épaisseur comprise entre 2 et 4mm tout en répondant aux normes EN 60079-0 et EN 60079-31 pour les zones ATEX 1, 21, 2 et 22.

Pour obtenir une efficacité lumineuse acceptable, lesdites microbilles sont préférentiellement réalisées en polyéthylène (PE), polytéréphtalate d'éthylène (PET), en polycarbonate (PC), en polyméthacrylate de méthyle (PMMA), ou en un assemblage de ces matériaux. Les capacités de transmission lumineuse de ces matériaux associées à la faible épaisseur possible de l'enveloppe ont permis d'obtenir un luminaire avec une efficacité lumineuse supérieure à 150 lm/W, bien au-dessus des luminaires existants sans microbilles.

Pour limiter le phénomène d'éblouissement, les microbilles présentent préférentiellement un indice de réfraction compris dans la plage 1.49-1.59, préférentiellement dans la plage 1.52-1.54. Ainsi, les microbilles présentent un indice de réfraction optimal avec la matière de base de l'enveloppe lorsque celle-ci est réalisée en polycarbonate (PC) ou en polyméthacrylate de méthyle (PMMA).

Selon un second aspect, l'invention concerne un luminaire comportant :
- une carte électronique portant des diodes électroluminescentes (LEDs) ; et
- une enveloppe selon le premier aspect de l'invention dans laquelle ladite zone de diffusion translucide est disposée en regard des diodes électroluminescentes.

Pour limiter le phénomène d'éblouissement, il est également préférable que les LEDs soit suffisamment distantes de la zone de diffusion afin qu'une partie de la lumière soit préalablement diffusée entre les LEDs et l'enveloppe. Par exemple, lorsque les LEDs présentent un pas de 2mm sur la carte électronique, la distance entre la zone de diffusion translucide et les LEDs doit être supérieure à 24mm pour que la diffusion de la lumière soit telle que la diffusion des microbilles rende la lumière parfaitement homogène.

### DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 4 représentent :
- Figure 1 : une vue en perspective éclatée d'un luminaire selon un mode de réalisation de l'invention ;
- Figure 2 : une vue en coupe du luminaire de la figure 1 ;
- Figure 3 : une vue en coupe des diffractions d'une lumière à travers une enveloppe de l'état de la technique ; et

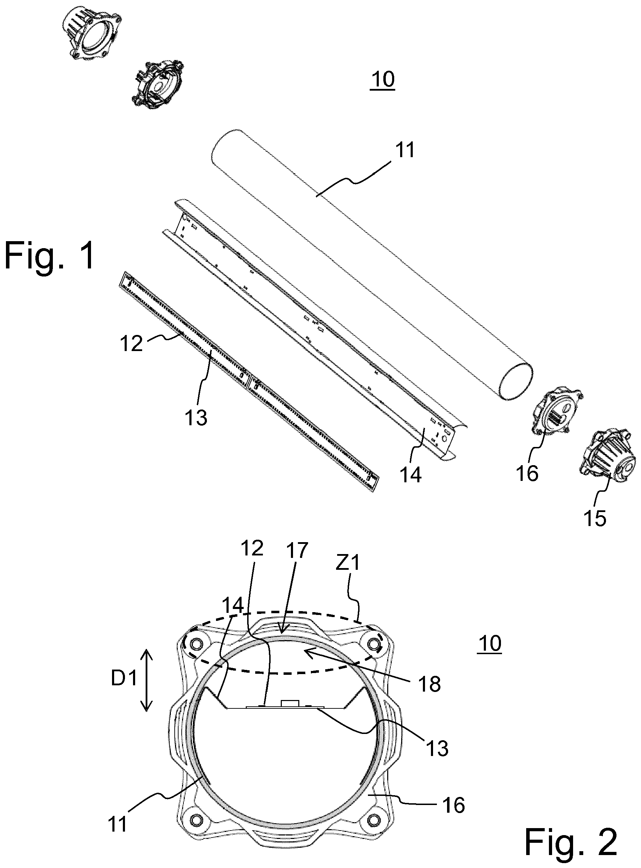

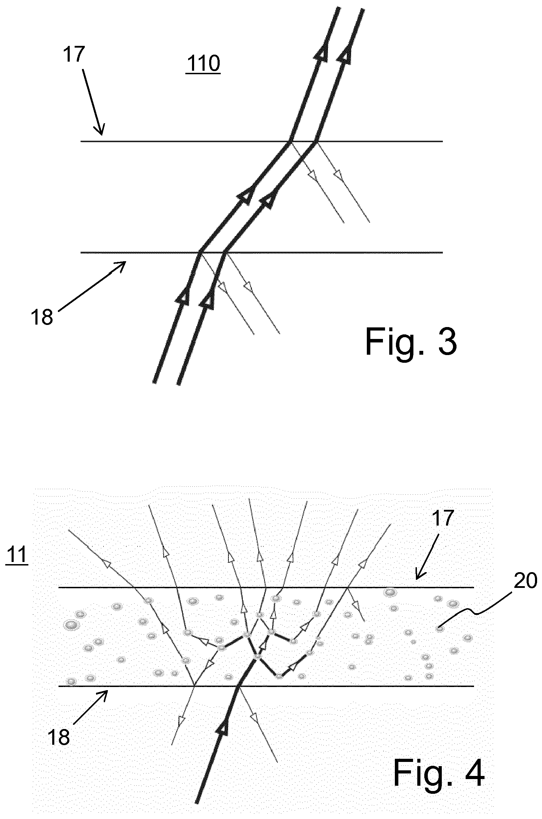

- Figure 3 : une vue en coupe des diffractions d'une lumière à travers l'enveloppe du luminaire de la figure 1.

### DESCRIPTION DETAILLEE DE L'INVENTION

Dans la description qui suit, un luminaire **10** est décrit avec une forme tubulaire. Bien entendu, l'invention peut s'adapter à d'autres formes de luminaires, notamment un luminaire avec une forme semi-cylindrique présentant une face plane destinée à fixer le luminaire sur un mur.

Tel qu'illustré sur les figures 1 et 2, le luminaire **10** présente une forme tubulaire obtenue par une enveloppe **11** recouvrant les éléments formant, supportant et alimentant une source lumineuse **12.** La source lumineuse **12** est réalisée par des diodes électroluminescentes (LEDs) montées sur deux lignes parallèles sur une carte électronique **13** et régulièrement espacées avec un pas de 2mm. En variante, la source lumineuse peut être réalisée par une autre topologie de LEDs ou par une source lumineuse fluorescente.

Pour former une enceinte étanche autour de la source lumineuse **12,** chaque extrémité de l'enveloppe **11** est obturée par une platine étanche **16** et un embout **15.**

Une des deux extrémités du luminaire **10** est configurée pour permettre le passage de câbles électriques d'alimentation à travers la platine **16** et l'embout **15.** L'alimentation est ensuite appliquée sur la carte électronique **13** qui comporte préférentiellement des LEDs. Pour alimenter les LEDs et supporter les composants électroniques de gestion, la carte électronique **13** s'étend préférentiellement sur toute la longueur de l'enveloppe **11.**

Une pièce de support **14** assure le maintien de la carte électronique dans l'enveloppe **11.** Pour ce faire, la pièce de support **14** présente une surface plane recevant la carte électronique et deux surfaces semi-cylindriques venant aux bords de la surface plane. Les surfaces semi-cylindriques permettent de fixer la pièce de support **14** sur la paroi interne de l'enveloppe **11.** L'orientation de la pièce de support **14** par rapport à l'enveloppe **11** peut être assurée par les embouts **15** de sorte à ce que la source lumineuse **12** soit disposée en regard d'une zone de diffusion **Z1** dans laquelle l'enveloppe **11** est translucide.

La zone de diffusion **Z1** de l'enveloppe **11** est définie comme la partie de l'enveloppe **11** permettant de diffuser la lumière de la source lumineuse **12.** Cette zone de diffusion **Z1** peut être réalisée par un matériau spécifique de l'enveloppe **11** ou toute l'enveloppe **11** peut être uniforme et apte à assurer la diffusion de la lumière de la source lumineuse **12.** Cette zone de diffusion **Z1** présente une paroi interne **18** disposée en regard de la source lumineuse **12** et une paroi externe **17** disposée au contact de la zone sensible. De préférence, la zone de diffusion **Z1** est disposée à une distance **D1** supérieure à 24 mm des LEDs.

Selon l'invention, tel qu'illustré sur la figure 4, la matière formant l'enveloppe **11** présente des microbilles **20** au moins dans la zone de diffusion **Z1.** Ainsi, lorsque la lumière issue de la source lumineuse **12** pénètre dans l'enveloppe **11** par la paroi interne **18,** cette lumière est diffractée par les multiples microbilles **20** avant d'être extraite de l'enveloppe **11** par la paroi externe **17.**

Il s'ensuit que la lumière issue du luminaire **10** n'éblouit pas les personnes amenées à travailler sous cette lumière. En effet, tel qu'illustré sur la figure 3, lorsqu'une enveloppe **110** ne comporte pas de microbilles **20,** la lumière est diffractée uniquement lors de la pénétration et l'extraction de l'enveloppe **110** alors qu'avec les microbilles **20** illustrées sur la figure 4, de multiples diffractions sont réalisées également dans le matériau formant l'enveloppe **10.**

Pour réaliser l'enveloppe **11,** il est préférable de sélectionner un matériau de base polycarbonate (PC), en polyméthacrylate de méthyle (PMMA), ou en un assemblage de ces matériaux avec un point de ramollissement Vicat pour une charge de 50 N supérieur à 120°C et une gravité spécifique supérieure à 1.0. En outre, pour garantir le vieillissement, le matériau de base présente préférentiellement un taux d'absorption d'eau inférieur à 0.4% et un taux d'absorption d'humidité inférieur à 0.2%.

Avant de former la zone de diffusion **Z1** de l'enveloppe **11** à partir de ce matériau de base, des microbilles **20** sont mélangées avec le matériau de base de sorte à ce que les microbilles **20** représentent entre 0.5% et 2.5% en poids de la zone de diffusion **Z1** de l'enveloppe **11.** En variante, lorsque les microbilles **20** sont intégrées dans toute l'enveloppe **11** et non uniquement dans la zone de diffusion **Z1**, il suffit de mélanger des microbilles **20** de sorte que les microbilles représentent entre 0.5% et 2.5% en poids de l'enveloppe **11.** Le mélange entre les microbilles **20** et le matériau de base doit préférentiellement être réalisé jusqu'à ce que les microbilles **20** soient uniformément réparties dans le matériau de base.

Les microbilles **20** sont préférentiellement réalisées en polyéthylène (PE), polytéréphtalate d'éthylène (PET), en polycarbonate (PC), en polyméthacrylate de méthyle (PMMA), ou en un assemblage de ces matériaux et présentent un diamètre compris entre 4 à 10 µm et un indice de réfraction compris dans la plage 1.49-1.59, préférentiellement dans la plage 1.52-1.54. Après le mélange des microbilles **20** avec le matériau de base, l'enveloppe **11** peut être réalisée selon la forme désirée par un procédé d'extrusion.

De préférence, l'enveloppe **11** est conformée pour obtenir une épaisseur comprise entre 2 et 4mm.

L'invention permet ainsi d'obtenir une enveloppe **11** qui est à la fois résistante, translucide et qui diffuse la lumière issue de la source lumineuse **12.** Contrairement aux luminaires de l'état de la technique cette invention permet à elle seule d'augmenter de plus de 10% l'efficacité des luminaires qui en sont équipés.

## Revendications

1. Enveloppe (11) pour luminaire (10) exposé à une atmosphère explosive, ladite enveloppe (11) présentant une zone de diffusion translucide (Z1) destinée à venir en regard d'une source lumineuse (12),
***caractérisée en ce que*** ladite zone de diffusion (Z1) de ladite enveloppe (11) intègre des microbilles (20) de 4 à 10 µm de diamètre, lesdites microbilles (20) représentant entre 0.5% et 2.5% en poids de ladite zone de diffusion de ladite enveloppe (11).

2. Enveloppe selon la revendication 1, ***dans laquelle*** les microbilles (20) sont réparties dans toute ladite enveloppe (11).

3. Enveloppe selon la revendication 1, ***dans laquelle*** les microbilles (20) sont réparties uniquement dans ladite zone de diffusion (Z1) de ladite enveloppe (11).

4. Enveloppe selon l'une des revendications 1 à 3, ***dans laquelle*** ladite enveloppe (11) est réalisée à partir d'un matériau de base en polycarbonate (PC), en polyméthacrylate de méthyle (PMMA), ou en un assemblage de ces matériaux.

5. Enveloppe selon l'une des revendications 1 à 4, ***dans laquelle*** ladite enveloppe (11) est réalisée à partir d'un matériau de base comportant un point de ramollissement Vicat pour une charge de 50 N supérieur à 120°C et une gravité spécifique supérieure à 1.0.

6. Enveloppe selon l'une des revendications 1 à 5, ***dans laquelle*** ladite enveloppe (11) est réalisée à partir d'un matériau de base comportant un taux d'absorption d'eau inférieur à 0.4% et un taux d'absorption d'humidité inférieur à 0.2%.

7. Enveloppe selon l'une des revendications 1 à 6, ***dans laquelle*** ladite enveloppe (11) présente une épaisseur comprise entre 2 et 4mm.

8. Enveloppe selon l'une des revendications 1 à 7, ***dans laquelle*** lesdites microbilles (20) sont réalisées en polyéthylène (PE), polytéréphtalate d'éthylène (PET), en polycarbonate (PC), en polyméthacrylate de méthyle (PMMA), ou en un assemblage de ces matériaux.

9. Enveloppe selon l'une des revendications 1 à 8, ***dans laquelle*** lesdites microbilles (20) présentent un indice de réfraction compris dans la plage 1.49-1.59, préférentiellement dans la plage 1.52-1.54.

10. Luminaire (10) comportant :
- une carte électronique (13) portant des diodes électroluminescentes (12) ; et
- une enveloppe (11) selon l'une des revendications 1 à 9 dans laquelle ladite zone de diffusion translucide (Z1) est disposée en regard des diodes électroluminescentes (12).

11. Luminaire selon la revendication 10, ***dans lequel,*** lesdites diodes électroluminescentes (12) présentant un pas de 2mm sur ladite carte électronique (13), la distance (D1) entre ladite zone de diffusion translucide (Z1) et lesdites diodes électroluminescentes (12) est supérieure à 24mm.
